# EUROPEAN PATENT APPLICATION

(11) **EP 1 249 989 A2**
(43) Date of publication of application: **16.10.2002**
(21) Application number: 02252275.9
(22) Date of filing: 27.03.2002
(51) Int. Cl.: H04L 29/12

(54) **Changing address information of network devices**

(30) Priority: 13.04.2001 US 834824
(71) Applicant: Hewlett-Packard Company, Palo Alto, CA 94304 (US)
(72) Inventor: Feather, Stan S., Longmont, CO 80501 (US); Chaloner, Michael J., Fort Collins, CO 80526 (US); Arp, Ronald K., Place Greeley, CO 80634 (US)
(74) Representative: Powell, Stephen David

(57) **Abstract**

A system for changing address information utilized by a network device (408), *e.g.*, a fibre channel network device, includes a control system (100) that is configured to receive information corresponding to desired address settings of the network device. The control system is able to store information corresponding to the desired address settings of the network device and replace the current address settings with the desired address settings of the network device. So configured, a communications port (406) associated with the network device may be recognized by the network as being associated with the current address.

## Description

The present invention relates to networks, such as Local Area Networks (LAN's), for example, and, in particular, to systems and methods for providing addresses to fibre channel devices of networks. Embodiments of the invention permit a fibre channel deferred setup.

As is known, network devices, such as servers and workstations, for example, typically communicate by utilizing a network protocol, *e.g*., IP. In contrast, other network devices, such as storage; for example, typically communicate by utilizing the small computer system interface (SCSI) protocol. Heretofore, in order to promote efficient utilization of network devices, information technology systems have utilized channels, which provide a direct or switched point-to-point connection, for communicating with storage, and networks for linking servers and workstations. Utilization of the aforementioned channels and networks, however, tends to reduce the potential performance capabilities of the various intercommunicating network devices. Therefore, in an effort to increase the efficiency of operation of network devices, a communications standard known as "Fibre Channel" is being developed.

As mentioned hereinbefore, a network may utilize both SCSI and networking protocols to facilitate intercommunication among the various devices of the network. Since many legacy storage devices employ the SCSI protocol, networks utilizing fibre channel typically interface with these legacy storage devices by utilizing a fibre channel to SCSI bridge. As utilized herein, the term "fibre channel to SCSI bridge" may also be referred to as a "fiber channel controller." Typically, such a fiber channel controller stores information for facilitating network interoperability. For example, a fibre channel controller may store an arbitrated loop physical address (ALPA), with the ALPA being changeable by a user via a front panel, which is used to interface with the fibre channel controller. However, current fibre channel controllers typically do not allow ALPA to be changed when the network device with which it is associated is connected to a fiber channel fabric topology and/or when the device is not connected to a network topology.

Therefore, there is a need for improved systems and methods that address these and other shortcomings of the prior art.

Briefly state, the present invention generally relates to computer networks. In this regard, a preferred embodiment of the invention may be construed as a system for changing address information utilized by a network device. The system includes a control system that is configured to receive information corresponding to desired address settings of the network device. The control system is able to store information corresponding to the desired address settings of the network device and replace the current address settings with the desired address settings of the network device. So configured, a communications port associated with the network device may be recognized by the network as being associated with the current address.

Some embodiments of the invention may be construed as providing methods for changing address information utilized by a fibre channel controller. Typically, such a fibre channel controller is associated with a port of a network device. Preferably, the method includes the steps of: (1) facilitating utilization of current address settings of a fibre channel controller for the network device; (2) receiving information corresponding to desired address settings of the network device; (3) storing information corresponding to the desired address settings of the network device; and (4) replacing the current address settings with the stored, desired address settings of the network device.

Embodiments of the invention also may be embodied on computer readable media and/or may be implemented via a graphical user interface(s).

Other features and advantages of the present invention will become apparent to one with skill in the art upon examination of the following drawings and detailed description. It is intended that all such features and advantages be included herein within the scope of the present invention, as defined in the appended claims.

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is a schematic diagram depicting representative fibre channel ports interconnected in a point-to-point configuration.

FIG. 2 is a schematic diagram depicting representative fibre channel ports interconnected in an arbitrated loop configuration.

FIG. 3 is a schematic diagram depicting representative fibre channel ports interconnected to a fabric.

FIG. 4 is a schematic diagram depicting representative communication devices and their associated fibre channel ports, with one of the communications devices being reassigned from a fabric configuration to an arbitrated loop configuration as facilitated by the control system of the present invention.

FIG. 5 is a schematic diagram depicting a network communication device communicating with a network resource manager for implementing preferred functionality of the present invention.

FIG. 6 is schematic diagram depicting a computer or processor-based system which may implement functionality of a preferred embodiment of the present invention.

FIG. 7 is a flowchart depicting functionality of an embodiment of the control system of FIG. 6.

FIG. 8 is a flowchart depicting functionality of an embodiment of the control system of FIG. 6.

FIG. 9 depicts representative screens of a graphical user interface, which may be displayed to an operator when utilizing the control system of FIG. 6.

FIG. 10 is a flowchart depicting functionality of an embodiment of the control system of FIG. 6.

FIG. 11 depicts representative screens of a graphical user interface, which may be displayed to an operator when utilizing the control system of FIG. 6.

FIG. 12 depicts representative screens of a graphical user interface, which may be displayed to an operator when utilizing the control system of FIG. 6.

FIG. 13 depicts representative screens of a graphical user interface, which may be displayed to an operator when utilizing the control system of FIG. 6.

FIG. 14 depicts representative screens of a graphical user interface, which may be displayed to an operator when utilizing the control system of FIG. 6.

FIG. 15 depicts representative screens of a graphical user interface, which may be displayed to an operator when utilizing the control system of FIG. 6.

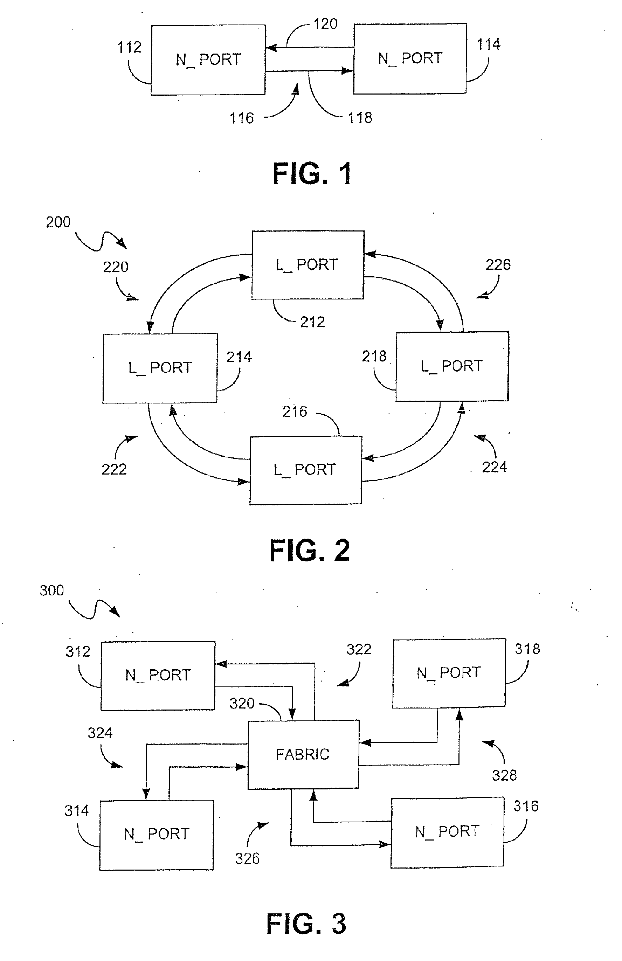

As mentioned hereinbefore, fibre channel may support various topologies of intercommunicating network devices, with interconnections of the various devices being facilitated by ports. For example, as depicted in FIG. 1, a representative point to point topology may be supported. More specifically, port 112 of a first communications device (not shown) communicates with port 114 of a second communications device (not shown) via link 116. Link 116 includes two unidirectional fibres, 118 and 120 respectively, which transmit in opposite directions, as well as their associated receivers and transmitters (not shown). As is known, fibres may comprise optical fiber and/or copper communications media.

Another fibre channel topology is referred to as the arbitrated loop. A representative example of an arbitrated loop 200 is depicted in FIG. 2. As shown therein, loop 200 includes ports, ports 212, 214, 216 and 218, that are serially interconnected via bidirectional fibres, *e*.*g*., fibres 220, 222, 224, and 226. Typically, ports configured for being arranged in a arbitrated loop configuration are known as L_ports.

Still another fibre channel topology is depicted in FIG. 3 which is representative of a fabric configuration. As shown in FIG. 3, fabric configuration 300 includes ports, *e.g.,* ports 312, 314, 316, and 318, which communicate with a fabric 320 via respective links, *e.g.,* links 322, 324, 326, and 328. Fabric 320 is a non-blocking switch(es) that enables full communications connectivity between the various ports. From the perspective of one of the network devices, connectivity to one of the various ports of the fabric is a point-to-point connection, much like the connectivity depicted in FIG. 1. Therefore, ports connected to a fabric typically can be referred to as N_ports.

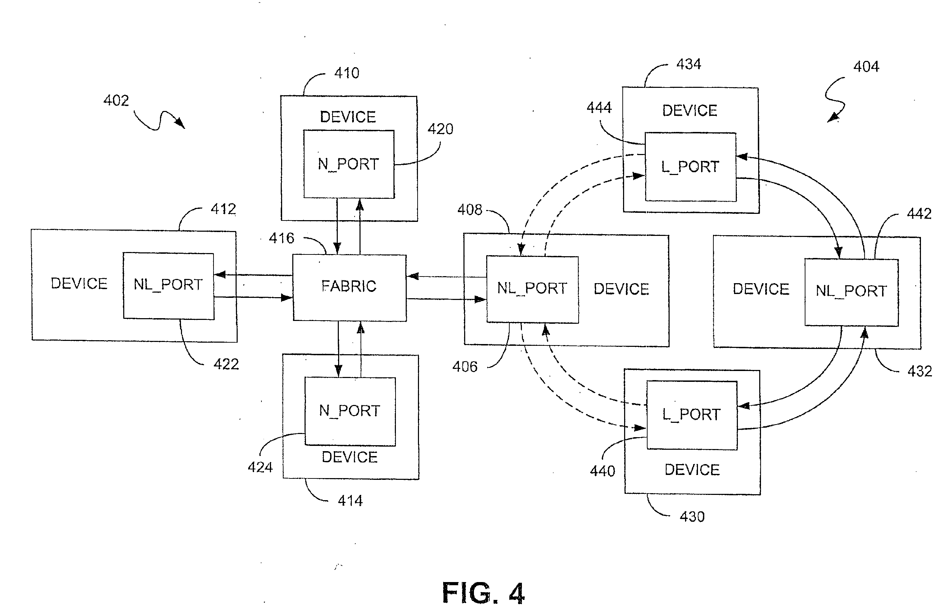

As mentioned hereinbefore, fibre channel is able to support various network topologies. In this regard, reference will now be made to FIG. 4 which depicts a representative example of how the present invention may facilitate the multiple topology support characteristics of fibre channel. As shown in FIG. 4, both a fabric configuration network 402 and an arbitrated loop 404 are depicted as potentially intercommunicating with a port 406. Port 406 is configured as an NL_port, which is adaptable for intercommunicating with network devices of either an arbitrated loop or a fabric, although other port types may be utilized. Presently, port 406 and its associated network device 408 are configured as part of fabric 402. Additionally, network device 408 may communicate with devices 410, 412, and 414 via fabric 416. More specifically, device 410 is interconnected to the fabric via port 420, device 412 is interconnected to the fabric via port 422, and device 414 is interconnected to the fabric via port 424.

Also depicted in FIG. 4 is arbitrated loop 404, which includes network devices 430, 432, and 434. The devices of the loop are interconnected via their respective ports 440, 442, and 444. In FIG. 4, device 408 currently is not communicatively coupled to the devices of the arbitrated loop 404.

For illustrative purposes, assume that device 408 utilizes SCSI, *e.g*., the device is a legacy storage device. Interfacing of device 408 with loop 404 is facilitated by a fibre channel controller (not shown). In order to facilitate proper intercommunication among the various devices of the loop 404, each device is assigned an address, *e.g.,* an arbitrated loop physical address (ALPA) which comprises an 8 bit value. Assignment of the ALPA associated with device 408 is facilitated by its fibre channel controller. In particular, when device 408 is connected to loop 404, *i.e.,* the link state of the device is "up," the fibre channel controller utilizes the ALPA as the current ALPA of the device. Establishing the current ALPA is facilitated by address settings or ALPA settings of the fibre channel controller, with the ALPA settings corresponding to the preferred value for ALPA. Typically, the ALPA settings of the fibre channel controller become effective at power up and/or reset, thereby enabling the stored ALPA settings to influence the current ALPA only at either power up or reset. This methodology becomes problematic, however, when an operator desires to change the ALPA settings without performing a power up or reset of the fibre channel controller, as such a power up/reset may disrupt communications among other devices of the loop, for instance.

As described in detail hereinafter, preferred embodiments of the control system of the present invention substantially alleviate the aforementioned shortcoming of typically requiring that an operator perform a power up/reset of a fibre channel controller when changing ALPA settings. In some embodiments, other enhancements also are provided, such as by enabling ALPA to be changed when a device is connected to a fabric topology. In this regard, some previous methodologies incorrectly assume that the addressing mode of the fibre channel controller, *i.e.,* hard, soft, or auto-assign, is not applicable to fabric and, therefore, does not provide for changing of the addressing mode while connected to fabric. In other embodiments, an operator may be enabled to change ALPA even though no link is present. This functionality preferably is enabled while the operator is provided with an indication that the change was successfully accomplished. This is in direct contrast to some previous methodologies that report the absence of a link as a failure during the ALPA change procedure.

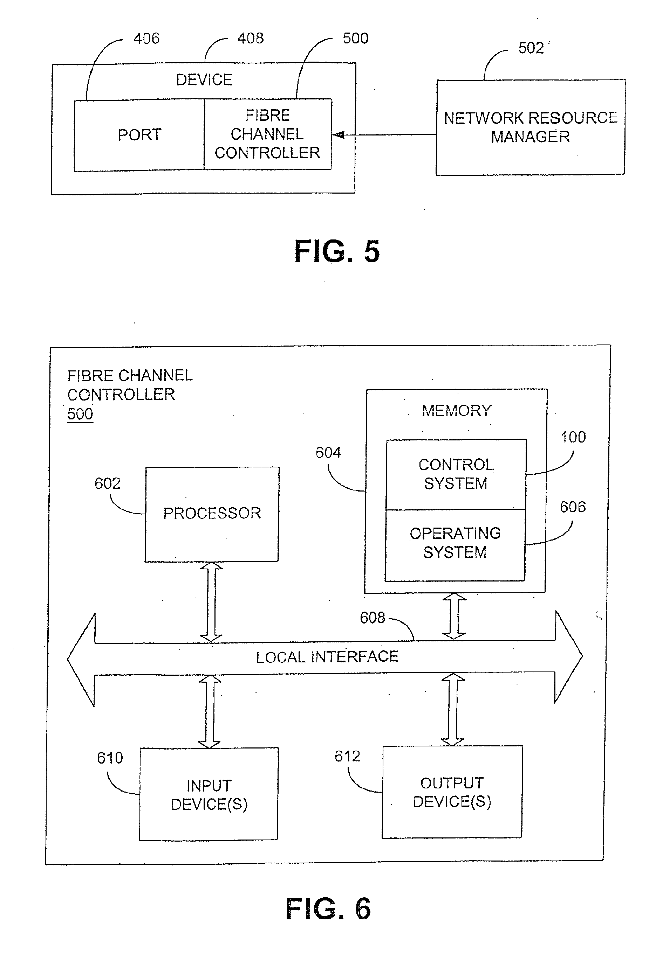

The control system of the present invention preferably facilitates changing of ALPA settings at virtually anytime and in virtual disregard of the link state or topology of the fibre channel controller of the device. Referring once again to FIG. 4, changing of ALPA of device 408 typically is required if that device is to be reassigned from fabric 402 to loop 404, for instance. As depicted in FIG. 5, fibre channel controller 500 of device 408 may be interfaced with a network management resource 502, which enables an operator to communicate with the fibre channel controller. For example, network management resource 502 may include a computer or processor-based system (such a system is described in detail hereinafter) that, through the use of a graphical user interface (GUI), for example, enables information corresponding to the fibre channel controller to be viewed and/or changed by the operator. By way of example, resource manager 502 may include a display device for displaying the GUI and any associated information to the operator.

Preferably, the control system of the present invention resides in fiber channel controller 500, although in other embodiments, the control system may reside on any other device or apparatus which may communicate with the fibre channel controller of interest. For instance, at least some of the functionality described herein as being associated with the control system may, in some embodiments, be implemented by the network resource manager 502 (FIG. 5), for example.

Control systems of the present invention may be implemented in hardware, software, firmware, or a combination thereof. In a preferred embodiment, however, the control system is implemented as a software package, which can be adaptable to run on different platforms and operating systems as shall be described further herein. In particular, a preferred embodiment of the control system, which comprises an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. Note that any such instruction execution system, apparatus, or device can have a distributed architecture, where various components are situated remote from one another, but can intercommunicate so as to provide the required functionality. The control system also may be implemented with a distributed architecture, even when implemented as a software package. In the context of this document, a "computer-readable medium" can be any means that can contain, store, communicate, propagate or transport the program for use by or in connection with the instruction execution system, apparatus, or device.

The computer readable medium can be, for example, but is not limited to, an electronic, magnetic, optical, electro-magnetic, infrared, or semi-conductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (magnetic), a read-only memory (ROM) (magnetic), an erasable, programmable, read-only memory (EPROM or Flash memory) (magnetic), an optical fiber (optical), and a portable compact disk read-only memory (CDROM) (optical). Note that the computer-readable medium could even be paper or another suitable medium upon which the program is printed, as the program can be electronically captured, via for instance, optical scanning of the paper or other medium, then compiled, interpreted, or otherwise processed in a suitable manner, if necessary, and then stored in a computer memory.

In an alternative embodiment, where the control system 100 is implemented in hardware, the control system can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), *etc.*

FIG. 6 illustrates a computer or processor-based system 600 that may implement the control system 100 of the present invention. As shown in FIG. 6, a computer system 500 generally comprises a processor 602 and a memory 604 with an operating system 606. Herein, the memory 604 may include volatile and/or nonvolatile memory elements, such as random access memory or read only memory. The processor 602 accepts instructions and data from memory 604 over a local interface 608, such as a bus(es). The system also includes an input device(s) 610 and an output device(s) 612. Examples of input devices may include, but are not limited to, a serial port, a scanner, or a local access network connection. Examples of output devices may include, but are not limited to, a video display, a Universal Serial Bus, or a printer port. Generally, this system may run any of a number of different platforms and operating systems, including, but not limited to, HP-ux™, Linux™, Unix™, Sun Solaris™ or Windows NT™ operating systems. The control system 100 of the present invention, the functions of which shall be described hereinafter, resides in memory 604 and is executed by the processor 602.

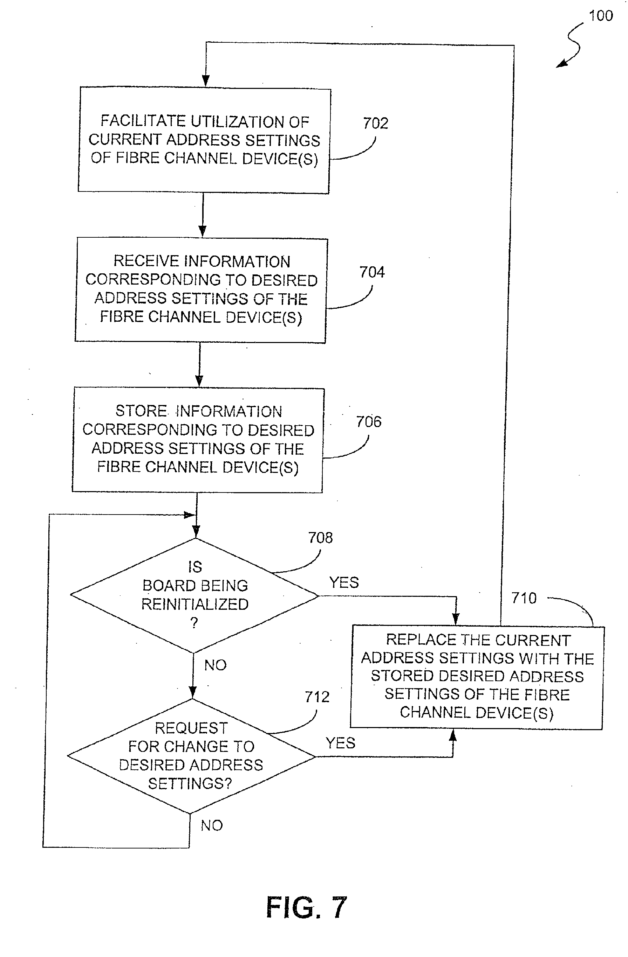

The flowchart of FIG. 7 shows the functionality of a preferred implementation of the control system 100 depicted in FIG. 6. In this regard, each block of the flowchart represents a module segment or portion of code which comprises one or more executable instructions for implementing the specified logical function or functions. It should also be noted that in some alternative implementations the functions noted in the various blocks may occur out of the order depicted in FIG. 7. For example, two blocks shown in succession in FIG. 7 may, in fact, be executed substantially concurrently where the blocks may sometimes be executed in the reverse order depending upon the functionality involved.

As shown in FIG. 7, the control system or method 100 of the present invention may be construed as beginning at block 702 where utilization of current address settings of a fibre channel device(s) is facilitated. At block 704, information corresponding to desired address settings of one or more of the fibre channel devices is received. Thereafter, such as in block 706, information corresponding to the desired address settings of the fibre channel devices is stored. In block 708, a determination is made as to whether the board is being powered up. If it is determined that the board is being powered up, the process preferably proceeds to block 710 where the current address settings are replaced with the desired address settings of the fibre channel devices that previously were stored. Thereafter, the process may return to block 702, and then proceed as described hereinbefore.

If it was determined in block 708 that the board was not being powered up, the process may continue to block 712 where a determination may be made as to whether a request for a change to the desired address settings has been received. For example, the request may be in the form of an operator initiated reset of the board or other form of reinitialization of the fibre channel controller, *e.g.,* warm boot, *etc..* If it is determined that a request for changing to the desired address settings is received, the process may proceed to block 710 as described hereinbefore. If, however, a request for changing to the desired address settings is not received, the process may return to block 708.

As mentioned hereinbefore, control systems of the present invention preferably distinguish between current ALPA and ALPA settings. Therefore, in contrast to previous methods, the present invention may enable a user to change ALPA settings without having to immediately reset the fiber controller of the device associated with those ALPA settings.

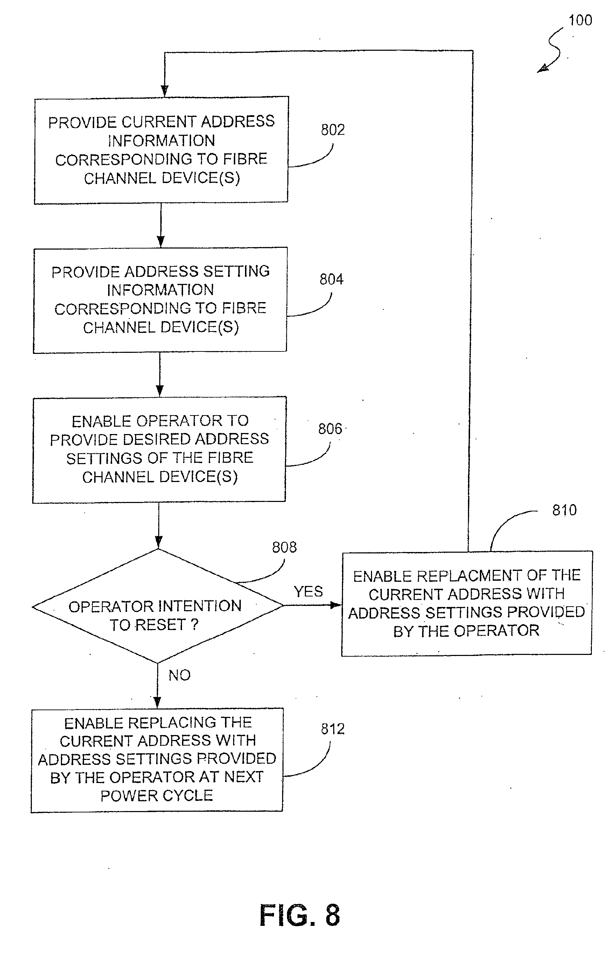

Embodiments of the present invention may facilitate the functionality depicted in FIG. 8. Such functionality may be utilized, for example, when a device is connected to a loop topology. In particular, as some embodiments of the present invention may provide information in various modes, *e.g*., a configure fiber channel information mode, a view fiber channel information mode, *etc*., the functionality depicted in FIG. 8 maybe representative of a preferred configure fiber channel information mode of operation.

In this regard, the control system or method 100 depicted in FIG. 8 may be construed as beginning at block 802 where current address information may be provided to a user, such as via a display device. Such current address information may include current topology, current address, and current addressing mode of the fibre channel controller of interest. As depicted in block 804, address setting information also may be provided, *e.g.,* address setting, addressing mode setting, *etc.* Thereafter, such as in block 806, an operator may be enabled to change the address setting information. After the operator approves of the address setting information, a determination may be made as to whether the address setting information previously provided in block 806 is to be utilized upon a current board reset or upon a next power cycle (block 808). Thereafter, such as depicted in block 810, the address setting information may be adopted as the current address upon reset, or, such as depicted in block 812, upon the next power cycle.

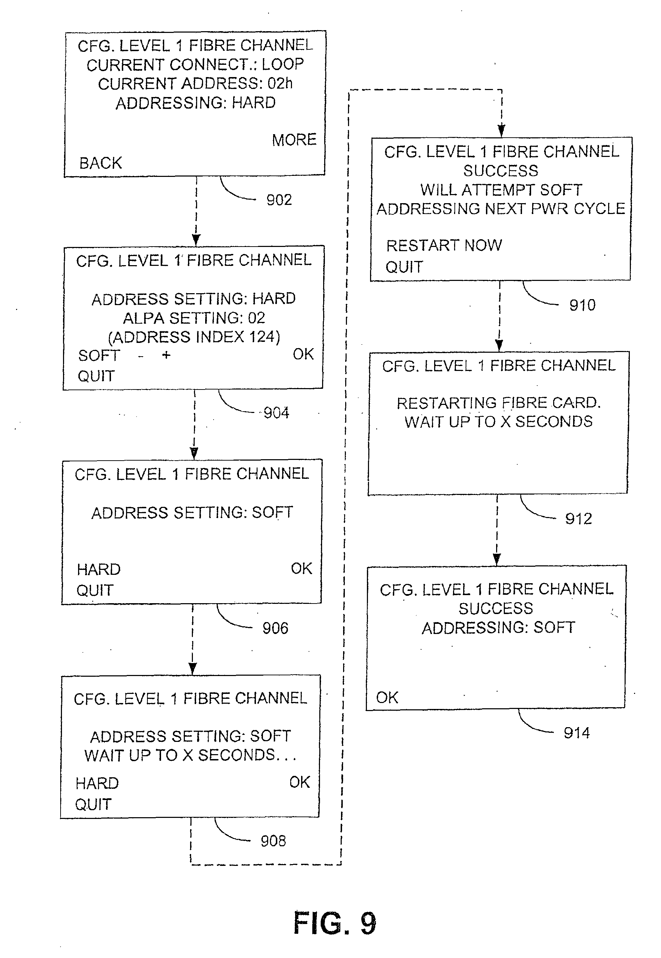

As depicted in FIG. 9, information pertaining to the control system or method 100 depicted in FIG. 8 may be provided to an operator via a graphical user interface that provides one or more screens of information to the operator via a display device. The information provided by the various screens may be associated with one or more of the function blocks depicted in FIG. 8. In a preferred embodiment, however, information depicted in block (screen) 902 corresponds to block 802, block 904 corresponds to block 804, blocks 906 and 908 correspond to block 806, and blocks 906 - 910 correspond to blocks 808 - 812. It should be noted that information provided to an operator via the GUI may be provided in various formats and/or in various configurations. For instance, in some embodiments, at least some of the information presented in the accompanying figures may not be provided to the operator, whereas, in other embodiments, other information may be provided. It is intended that all such embodiments be considered within the scope of the present invention.

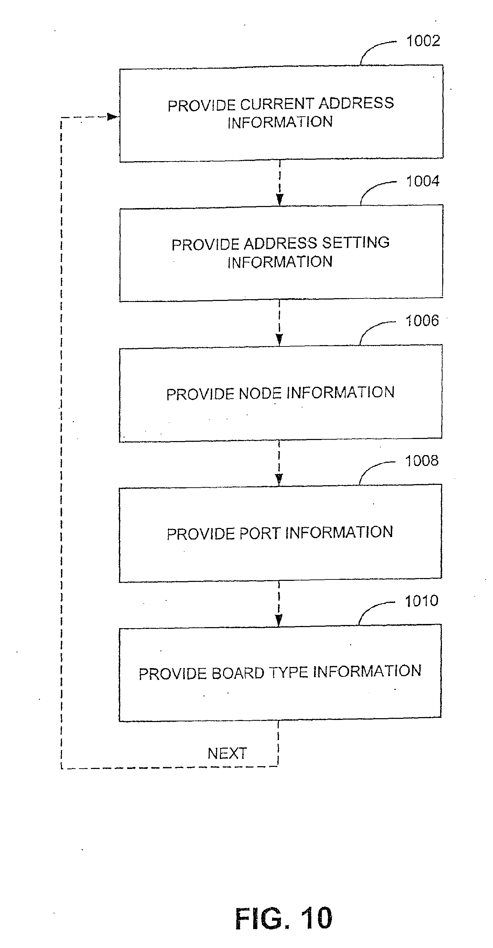

In regard to view fiber channel information mode, some embodiments of the present invention may provide the functionality depicted in FIG. 10. In this regard, the method 100 may be construed as beginning at block 1002 where an operator may be provided with current address information. More specifically, when in a loop-connected configuration, for example, such current address information may include current link state, current topology, current address, and current addressing mode. Thereafter, such as depicted in block 1004, the operator may be provided with address setting information, such as address setting, and addressing mode setting. As depicted in blocks 1006 - 1008, additional information such as node, port, and board type information may be provided to the operator.

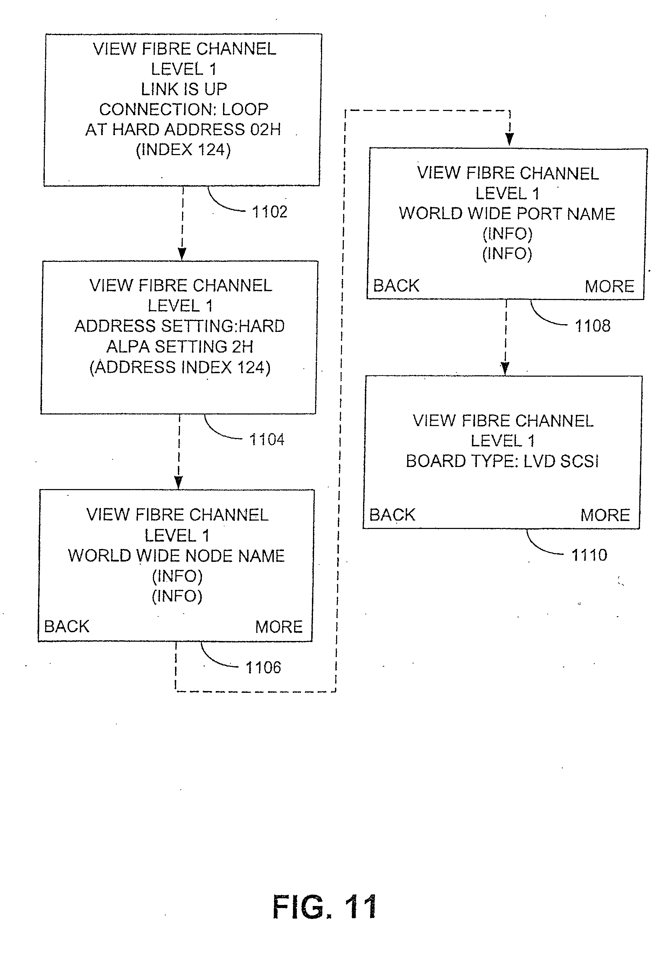

As depicted in FIG. 11, the aforementioned information provided to an operator (shown in FIG. 10 and described in relation to a loop-connected configuration) may be presented in a screen format via a display device. In this regard, the representative screens 1102 - 1110 each relate to a corresponding block depicted in FIG. 10, *i*.*e*., blocks 1002 - 1010.

As mentioned hereinbefore, previous methodologies do not allow ALPA to be changed when a device, such as a library, for example, is connected to fabric topologies. Thus, the previous methodologies potentially place limitations upon operators who desire to change interconnection of the device from a fabric to a loop topology, and also those who would otherwise pre-configure the device before making such a change. Embodiments of the present invention, however, do not impose such limitations. In this regard, preferred control systems or the methodologies of the present invention do not inhibit changing of the addressing mode (hard or soft) while the device is connected to fabric topologies. A preferred embodiment of the control system or method 100 which facilitates the aforementioned functionality will now be described with reference back to the flowchart depicted in FIG. 8.

Referring to FIG. 8, the functionality depicted therein also may be utilized, for example, when a device is connected to a fabric topology (when in configure fiber channel information mode). In this regard, the current address information provided to the operator in block 802 preferably includes current topology and current address of the fibre channel controller of interest. The address setting information (block 804) provided preferably includes address setting and addressing mode setting. In block 806, an operator may be enabled to change the address setting information. After the operator approves of the address setting information, a determination may be made as to whether the address setting information previously provided in block 806 is to be utilized upon a current board reset or upon a next power cycle (block 808). Thereafter, such as depicted in block 810, the address setting information may be adopted as the current address upon reset, or, such as depicted in block 812, upon the next power cycle.

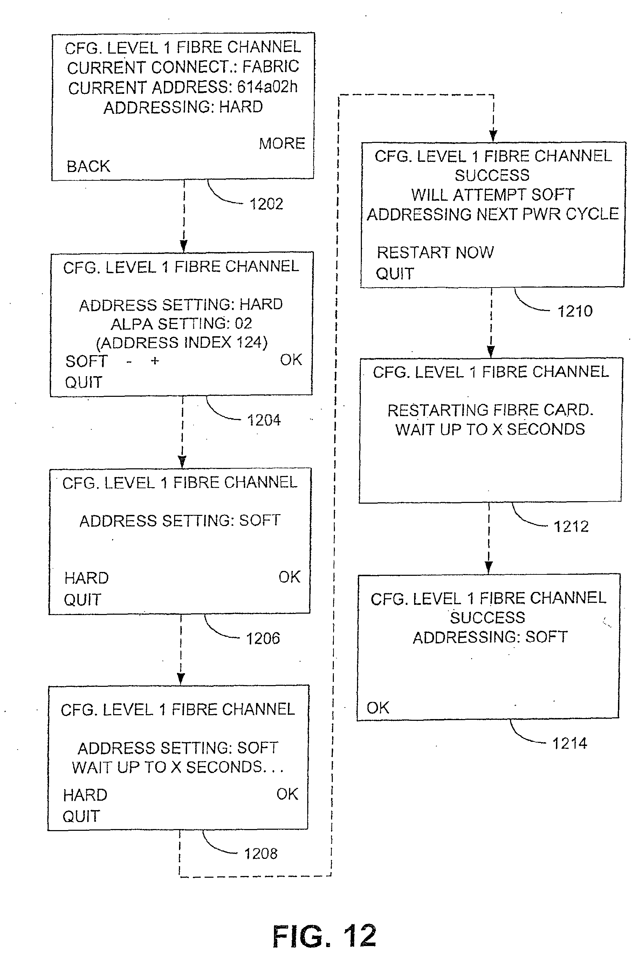

Representative screens of information which correspond to the functionality described in relation to the fabric-connected configuration is shown in FIG. 12. As depicted therein, block (screen) 1202 corresponds to block 802, screen 1204 corresponds to block 804, screens 1206 and 1208 correspond to block 806, screen 1210 corresponds to blocks 808 and 812, and blocks 1212 and 1214 correspond to blocks 808 and 810. As shown in screen 1210, an attempt to change the addressing mode is recognized by the present invention. Additionally, as indicated in screen 1214, the present invention allows ALPA to be changed when the device is connected to fabric topologies.

Referring once again to FIG. 10, the functionality depicted therein also maybe utilized, for example, when a device is connected to a fabric topology (when in view fiber channel information mode). In this regard, an operator may be provided with current address information (block 1002). More specifically, when in a fabric-connected configuration, for example, such current address information may include current link state, current topology, and current address. Thereafter, such as depicted in block 1004, the operator may be provided with address setting information, such as address setting, and addressing mode setting. As depicted in blocks 1006 - 1008, additional information such as node, port, and board type information may be provided to the operator.

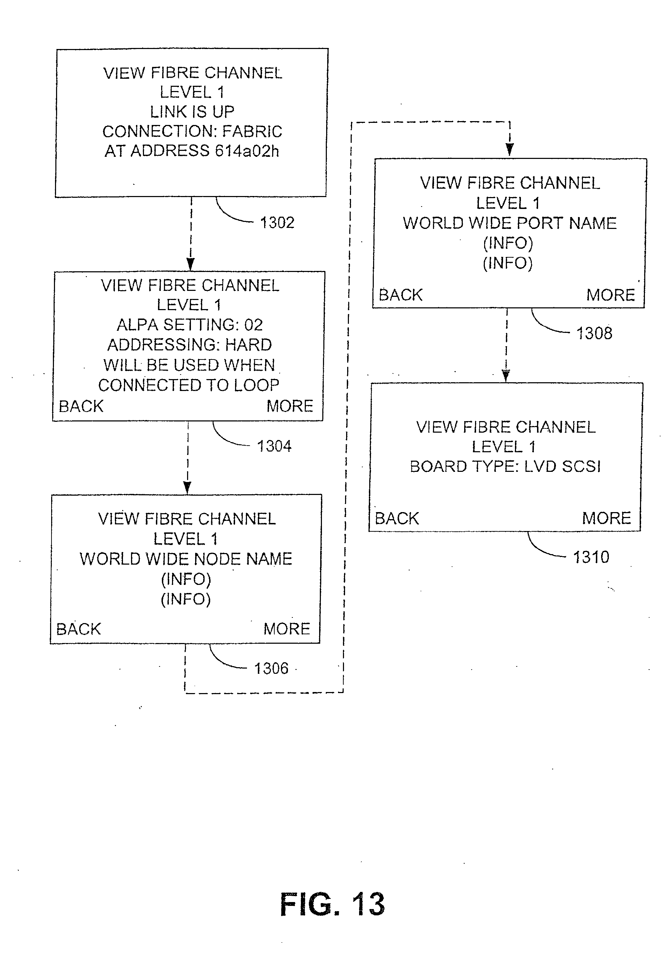

Representative screens of information which correspond to the functionality described in relation to the fabric-connected configuration (when in view fiber channel information mode) is shown in FIG. 13. As depicted therein, the representative screens 1302 - 1310 each relate to a corresponding block depicted in FIG. 10, *i.e.,* blocks 1002 - 1010.

Referring once again to FIG. 8, the functionality depicted therein also may be utilized, for example, when a device is not connected to a fibre channel topology (when in configure fiber channel information mode). In this regard, the current address information provided to the operator in block 802 preferably includes current topology, current address, and current addressing mode of the fibre channel controller of interest. The address setting information (block 804) provided preferably includes address setting and addressing mode setting. Much like the description of blocks 806 - 812, described hereinbefore in relation to a loop-connected configuration and the fabric-connected configuration, an operator may be enabled to change the address setting information (block 806). After the operator approves of the address setting information, a determination may be made as to whether the address setting information previously provided in block 806 is to be utilized upon a current board reset or upon a next power cycle (block 808). Thereafter, such as depicted in block 810, the address setting information may be adopted as the current address upon reset, or, such as depicted in block 812, upon the next power cycle.

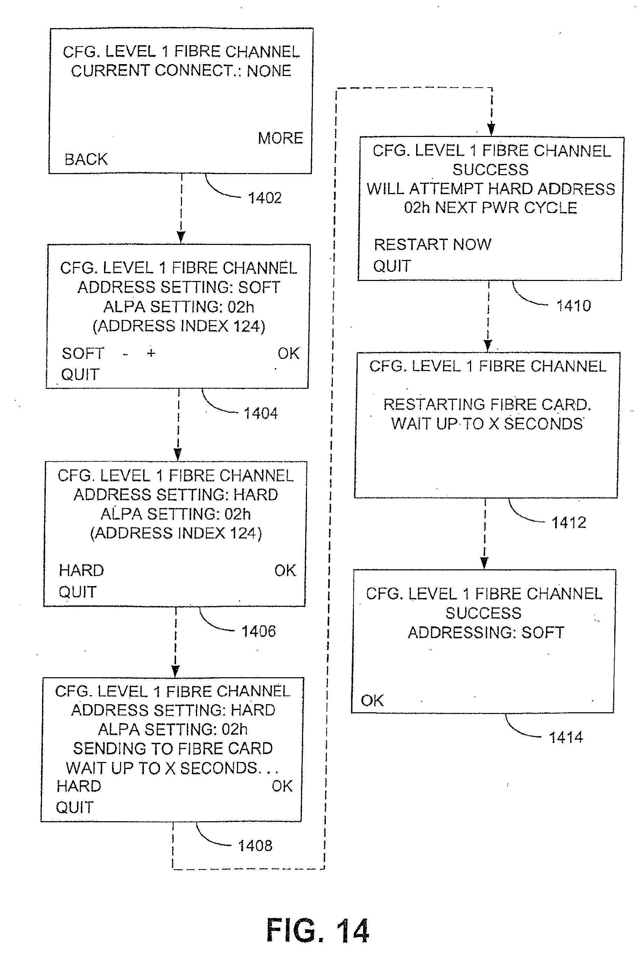

Representative screens of information which correspond to the functionality described in relation to the fabric-connected configuration is shown in FIG. 14. As depicted therein, block (screen) 1402 corresponds to block 802, screen 1404 corresponds to block 804, screens 1406 and 1408 correspond to block 806, screen 1410 corresponds to blocks 808 and 812, and blocks 1412 and 1414 correspond to blocks 808 and 810. As shown in screens 1410 and 1414, attempt to change the addressing mode and the ALPA, respectively, do not show the operator a failure merely because the device is not connected to a fabric topology.

Referring once again to FIG. 10, the functionality depicted therein also may be utilized, for example, when a device is not connected to a fibre channel topology (when in view fiber channel information mode). In this regard, an operator may be provided with current address information (block 1002). More specifically, when in a non-connected configuration, for example, such current address information may include current link state, current topology, current address; and addressing mode. Thereafter, such as depicted in block 1004, the operator may be provided with address setting information, such as address setting, and addressing mode setting. As depicted in blocks 1006 - 1008, additional information such as node, port, and board type information may be provided to the operator.

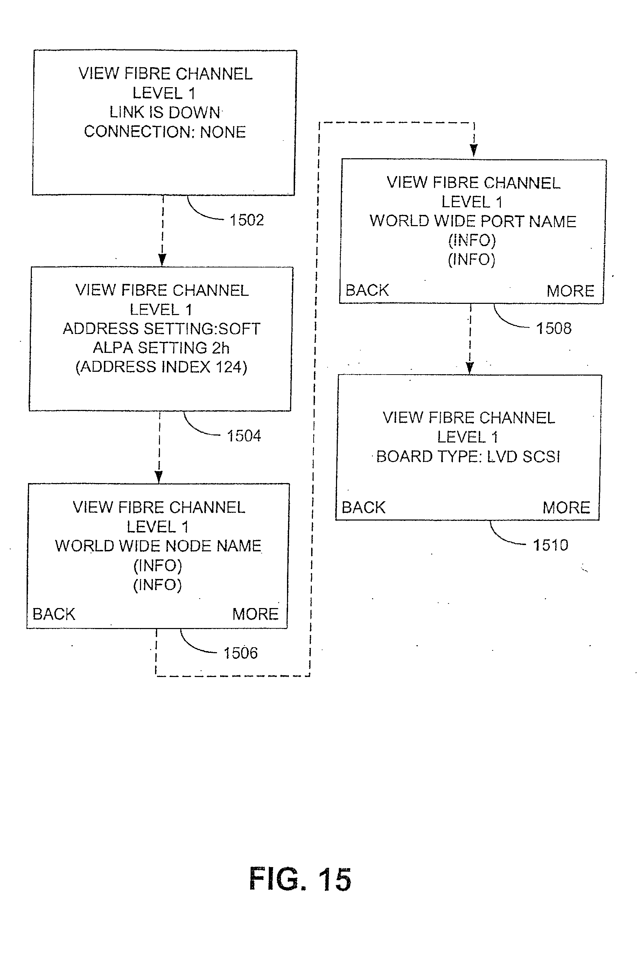

Representative screens of information which correspond to the functionality described in relation to the fabric-connected configuration (when in view fiber channel information mode) is shown in FIG. 15. As depicted therein, the representative screens 1502 - 1510 each relate to a corresponding block depicted in FIG. 10, *i*.*e*., blocks 1002 - 1010.

The foregoing description has been presented for purposes of illustration and description. It is not intended to be exhaustive or to limit the invention to the precise forms disclosed. Modifications or variations are possible in light of the above teachings. The embodiment or embodiments discussed, however, were chosen and described to provide the best illustration of the principles of the invention and its practical application to thereby enable one of ordinary skill in the art to utilize the invention in various embodiments and with various modifications as are suited to the particular use contemplated. All such modifications and variations, are within the scope of the invention as determined by the appended claims when interpreted in accordance with the breadth to which they are fairly and legally entitled.

## Claims

1. A method for changing address information utilized by a fibre channel controller (500), the fibre channel controller being associated with a port (406) of a network device (408), the method comprising the steps of:
facilitating utilization of current address settings of a fibre channel controller for the network device;
receiving information-corresponding to desired address settings of the network device;
storing information corresponding to the desired address settings of the network device; and
replacing the current address settings with the stored, desired address settings of the network device.

2. The method of claim 1, wherein the step of replacing the current address settings comprises the step of:
determining whether to replace the current address settings with the stored, desired address settings upon re-initialization of the fibre channel controller.

3. The method of claim 1, wherein the step of replacing the current address settings comprises the step of:
replacing the current address settings with the stored, desired address settings while the fibre channel controller is connected to a fabric topology (402).

4. The method of claim 1, wherein the step of replacing the current address settings comprises the step of:
replacing the current address settings with the stored, desired address settings while the fibre channel controller is not connected to a fibre channel topology.

5. The method of claim 2, wherein the step of determining whether to replace the current address settings comprises the step of:
determining whether to replace the current address settings with the stored, desired address settings upon an operator initiated reset of the fibre channel controller or upon a next power cycle of the fibre channel controller.

6. A system for changing address information utilized by a network device (408), said system comprising:
a control system (100) configured to receive information corresponding to desired address settings of the network device, store information corresponding to the desired address settings of the network device, and replace the current address settings with the desired address settings of the network device such that a communications port associated with the network device may be recognized by the network as being associated with the current address in disregard of the network topology corresponding to the network device.

7. The system of claim 6, wherein said control system comprises:
means for receiving information corresponding to desired address settings of the network device;
means for storing information corresponding to the desired address settings of the network device; and
means for replacing the current address settings with the desired address settings of the network device.

8. The system of claim 6, wherein said control system is configured to provide a graphical user interface suitable for display to an operator, said graphical user interface being configured to enable receipt of information corresponding to the desired address settings of the network device.

9. The system of claim 6, wherein said control system includes a fibre channel controller (500), said fibre channel controller comprising:
a computer readable medium having a computer program for changing address information of the network device, said computer readable medium including logic configured to enable current address information corresponding to an address of the fibre channel controller to be provided to an operator, logic configured to enable address setting information corresponding to address settings of the fibre channel controller to be provided to the operator, logic configured to enable the operator to change the address settings of the fibre channel controller, and logic configured to enable the operator to change the current address of the fibre channel controller in response to the change of the address settings; and,
wherein said fibre channel controller is configured to provide an operator with an indication that the current address settings are to be replaced with the address settings even though the fibre channel controller is not presently connected to a fibre channel topology.

10. The system of claim 6, wherein said control system includes a fibre channel controller, said fibre channel controller being configured to provide a graphical user interface suitable for display to an operator, said graphical user interface being configured to provide the operator with an indication that the current address settings are to be replaced with the address settings even though the fibre channel controller is not presently connected to a fibre channel topology.
